# EUROPÄISCHE PATENTSCHRIFT

(11) **EP 3 328 686 B1**
(45) Veröffentlichungstag und Bekanntmachung des Hinweises auf die Patenterteilung: **01.05.2019**
(21) Anmeldenummer: 16757819.4
(22) Anmeldetag: 11.07.2016
(51) Int. Cl.: B60R 1/00, B60W 30/00

(54) **VERFAHREN UND VORRICHTUNG ZUM ANZEIGEN EINER UMGEBUNGSSZENE EINES FAHRZEUGGESPANNS**
METHOD AND DEVICE FOR DISPLAYING THE SURROUNDING FIELD OF A TRACTOR AND TRAILER
MÉTHODE ET DISPOSITIF POUR L'AFFICHAGE DE LA RÉGION ENTOURANT UN ENSEMBLE VÉHICULE ET REMORQUE

(30) Priorität: 31.07.2015 DE 102015214611
(43) Veröffentlichungstag der Anmeldung: 06.06.2018
(73) Patentinhaber: Conti Temic Microelectronic GmbH, 90411 Nürnberg (DE)
(72) Erfinder: LÖHR, Felix, 96317 Kronach (DE); SCHREPFER, Jörg, 96355 Tettau (DE)
(86) Internationale Anmeldenummer: PCT/DE2016/200313
(87) Internationale Veröffentlichungsnummer: WO 2017/020898

(56) Entgegenhaltungen:
- WO-A1-02/09433
- WO-A2-2015/001054
- JP-A- 2003 235 036
- JP-A- 2006 256 544
- JP-A- 2012 105 158
- US-A1- 2014 085 472

## Beschreibung

Die vorliegende Erfindung betrifft ein Verfahren und eine Vorrichtung zum Anzeigen einer Umgebungsszene, insbesondere der Umgebungsszene eines Fahrzeugs. Darüber hinaus betrifft die vorliegende Erfindung ein Surround-View-System für ein Fahrzeuggespann.

Fahrzeuge werden zunehmend mit Rear-View-Systemen oder Surround-View-Systemen ausgerüstet, die aus Kamerabildern ein Anzeigenbild berechnen, welches dem Fahrer eines Fahrzeugs bei der Durchführung von Fahrmanövern wie zum Beispiel beim Einparken oder Rückwärtsfahren, unterstützen. Gerade beim Rückwärtsfahren ist der Fahrer eines Fahrzeugs in der Regel in seiner Sicht eingeschränkt, so dass er durch Unterstützung des Anzeigesystems Entscheidungen treffen kann, um sein Fahrzeug sicher zu manövrieren. Durch die Anzeige von aufbereiteten Kamerabildern kann dem Fahrer dabei ein möglichst realistisches Bild der Fahrzeugumgebung gegeben werden. Hierdurch ist eine effiziente Unterstützung des Fahrers bei seinen Fahrmanövern möglich.

Bei einem Fahrzeuggespann, bei dem ein Zugfahrzeug mit einem Anhänger gekoppelt ist, erfasst eine nach hinten gerichtete Kamera an dem Zugfahrzeug in der Regel zu einem großen Teil den Anhänger. Der Anhänger verdeckt dabei die Sicht auf den weiteren rückwärtigen Umgebungsbereich. Daher kann ein Kamerasystem, bei dem ausschließlich Kameras am Zugfahrzeug angeordnet sind, für ein solches Fahrzeuggespann keine ausreichende rückwärtige Sicht ermöglichen. Gelegentlich wird daher eine zusätzliche Kamera an dem Anhänger angeordnet. Werden die Bilder dieser Kamera an dem Anhänger einem Fahrzeugführer in dem Zugfahrzeug angezeigt, so kann dies gegebenenfalls zu Verwirrungen führen, da die Ausrichtung der Kamera an dem Anhänger nicht mit der Ausrichtung des Zugfahrzeugs übereinstimmt.

Das Dokument WO 02/09433 A1 offenbart ein Verfahren zum Anzeigen einer Umgebungsszene eines Fahrzeuggespanns, mit den Schritten: (a) Bereitstellen von sensorisch erfassten ersten Bilddaten mittels einer an einem ersten Fahrzeug angeordneten ersten Fahrzeugsensoreinheit; (b) Bereitstellen von sensorisch erfassten zweiten Bilddaten mittels einer an einem zweiten Fahrzeug angeordneten zweiten Fahrzeugsensoreinheit; (c) Ermitteln einer räumlichen Lage des zweiten Fahrzeugs in Bezug auf das erste Fahrzeug; (d) Fusionieren der ersten Bilddaten und der zweiten Bilddaten unter Verwendung der ermittelten räumlichen Lage des zweiten Fahrzeugs in Bezug auf das erste Fahrzeug zur Generierung einer Umgebungsszene; Generieren einer grafischen Darstellung des zweiten Fahrzeugs; und (e) Anzeigen der generierten Umgebungsszene auf einer Fahrzeuganzeige.

Es ist daher eine Aufgabe der vorliegenden Erfindung, ein Verfahren und eine Vorrichtung zum Anzeigen einer Umgebungsszene eines Fahrzeuggespanns zu schaffen, bei der die Umgebungsszene im Umfeld um das gesamte Fahrzeuggespann möglichst vollständig und realistisch dargestellt werden kann, so dass der Fahrer bei Fahrentscheidungen und seiner Orientierung effizient unterstützt wird.

Diese Aufgabe wird erfindungsgemäß durch ein Verfahren mit den im Patentanspruch 1 angegebenen Merkmalen gelöst.

Die Erfindung schafft demnach ein Verfahren zum Anzeigen einer Umgebungsszene eines Fahrzeuggespanns mit den Schritten des Bereitstellens von sensorisch erfassten ersten Bilddaten und des Bereitstellens von sensorisch erfassten zweiten Bilddaten. Die ersten Bilddaten werden dabei mittels einer an einem ersten Fahrzeug angeordneten Fahrzeugsensoreinheit erfasst und bereitgestellt. Die zweiten Bilddaten werden mittels einer an einem zweiten Fahrzeug angeordneten zweiten Fahrzeugsensoreinheit erfasst und bereitgestellt. Das erste Fahrzeug und das zweite Fahrzeug können dabei miteinander mechanisch gekoppelt sein und somit ein Fahrzeuggespann bilden. Das Fahrzeug umfasst ferner einen Schritt zum Ermitteln einer räumlichen Lage des zweiten Fahrzeugs in Bezug auf das erste Fahrzeug; und des Fusionierens der ersten Bilddaten und der zweiten Bilddaten unter Verwendung der ermittelten räumlichen

Lage des zweiten Fahrzeugs in Bezug auf das erste Fahrzeug. Durch das Fusionieren der ersten Bilddaten und der zweiten Bilddaten wird dabei eine Umgebungsszene des Fahrzeuggespanns generiert. Anschließend wird die generierte Umgebungsszene auf einer Fahrzeuganzeige angezeigt.

Die Erfindung schafft ferner eine Vorrichtung zum Anzeigen einer Umgebungsszene eines Fahrzeuggespanns mit den im Patentanspruch 11 angegebenen Merkmalen.

Die Erfindung schafft demnach eine Vorrichtung zum Anzeigen einer Umgebungsszene eines Fahrzeuggespanns mit einer ersten Fahrzeugsensoreinheit, einer zweiten Fahrzeugsensoreinheit und einer Berechnungseinheit. Die erste Fahrzeugsensoreinheit ist an einem ersten Fahrzeug angeordnet und dazu ausgelegt, erste Bilddaten bereitzustellen. Die zweite Fahrzeugsensoreinheit ist an einem zweiten Fahrzeug angeordnet und dazu ausgelegt, zwei Bilddaten bereitzustellen. Das erste Fahrzeug und das zweite Fahrzeug können mechanisch miteinander gekoppelt sein und so ein Fahrzeuggespann bilden. Die Berechnungseinheit ist dazu ausgelegt, eine räumliche Lage des zweiten Fahrzeugs in Bezug auf das erste Fahrzeug zu ermitteln. Die Berechnungseinheit ist ferner dazu ausgelegt, erste Bilddaten und zweite Bilddaten unter Verwendung der ermittelten räumlichen Lage des zweiten Fahrzeugs in Bezug auf das erste Fahrzeug zu fusionieren. Hierdurch wird eine Umgebungsszene des Fahrzeuggespanns generiert. Die so generierte Umgebungsszene kann auf einer mit der Berechnungseinheit verbundenen Fahrzeuganzeige angezeigt werden.

Der vorliegenden Erfindung liegt die Idee zugrunde, für ein Fahrzeuggespann aus zwei miteinander gekoppelten Fahrzeugen eine gemeinsame Umgebungsszene zu generieren. Hierzu können Bilddaten miteinander kombiniert werden, die sowohl von Bildsensoren stammen, welche an einem Zugfahrzeug des Fahrzeugs gespannt angeordnet sind, und Bilddaten, die von Bildsensoren stammen, die an dem Anhänger des Fahrzeuggespanns angeordnet sind. Alle diese Bilddaten werden dabei in ein gemeinsames Bezugssystem überführt. Vorzugsweise handelt es sich bei diesem gemeinsamen Bezugssystem um ein Bezugssystem auf Basis des Zugfahrzeugs. Auf diese Weise kann ein Fahrzeugführer in dem Zugfahrzeug eine so dargestellte Umgebungsszene besonders einfach erfassen und daraufhin effizient Entscheidungen für Fahrmanöver bilden.

Durch die Kombination von Bilddaten, die von Bildsensoren sowohl vom Zugfahrzeug als auch vom Anhänger stammen, kann dabei ein besonders großer Bereich in der Umgebung um das gesamte Fahrzeuggespann erfasst und dargestellt werden. Insbesondere können somit auch in einem Zugfahrzeug einem Fahrzeugführer diejenigen Bildbereiche dargestellt werden, die durch einen Anhänger verdeckt werden. Hierdurch wird ein sicheres Manövrieren des Fahrzeuggespanns insbesondere bei einer Rückwärtsfahrt ermöglicht.

Das Auswerten der räumlichen Lage zwischen den beiden Fahrzeugen eines solchen Fahrzeuggespanns bei der Fusionierung der Bilddaten ermöglicht dabei eine besonders gute und zuverlässige Kombination aller Bilddaten. Insbesondere können die Bilddaten von an einem Anhänger angeordneten Kamerasystem hierdurch sehr gut in das Bezugssystem des Zugfahrzeugs überführt werden.

Gemäß einer Ausführungsform überlappen sich Abbildungsbereiche der ersten Fahrzeugsensoreinheit und der zweiten Fahrzeugsensoreinheit zumindest teilweise. Durch das zumindest teilweise Überlappen der Abbildungsbereiche der Fahrzeugsensoreinheiten kann eine möglichst vollständige Abbildung der Fahrzeugumgebung erreicht werden. Darüber hinaus ermöglichen überlappende Abbildungsbereiche von einzelnen Fahrzeugsensoreinheiten auch durch die Analyse der Überlappungsbereiche eine besonders gute Fusionierung der Bilddaten zu einer gemeinsamen Umgebungsszene.

Gemäß einer Ausführungsform detektiert der Schritt zum Ermitteln der räumlichen Lage des zweiten Fahrzeugs in Bezug auf das erste Fahrzeug das zweite Fahrzeug in den bereitgestellten ersten Bilddaten. Basierend auf dem Detektionsergebnis für die Detektion des zweiten Fahrzeugs in den ersten Bilddaten kann daraufhin die räumliche Lage des zweiten Fahrzeugs in Bezug auf das erste Fahrzeug ermittelt werden. Auf diese Weise ist es möglich, die Bilddaten der ersten Fahrzeugsensoreinheit dazu zu verwenden, um die Lage des zweiten Fahrzeugs in Bezug auf das erste Fahrzeug zu ermitteln. Somit sind keine weiteren separaten Sensoren erforderlich, die die räumliche Lage der beiden Fahrzeuge zueinander erfassen.

Gemäß einer weiteren Ausführungsform umfasst das Ermitteln der räumlichen Lage des zweiten Fahrzeugs in Bezug auf das erste Fahrzeug das Ermitteln eines Winkels und/oder eines Abstands zwischen dem ersten Fahrzeug und dem zweiten Fahrzeug. Bei dem ermittelten Winkel zwischen erstem Fahrzeug und zweitem Fahrzeug kann es sich beispielsweise um die Winkelstellung einer Anhängerdeichsel handeln. Durch die Ermittlung von Winkelstellung zwischen den beiden Fahrzeugen sowie dem Abstand zwischen den beiden Fahrzeugen kann die räumliche Lage des zweiten Fahrzeugs und somit auch die Position der zweiten Fahrzeugsensoreinheit in Bezug auf das erste Fahrzeug bzw. auf die erste Fahrzeugsensoreinheit eindeutig bestimmt werden. Gemäß der Erfindung umfasst das Verfahren zum Anzeigen einer Umgebungsszene eines Fahrzeuggespanns einen Schritt zum Generieren einer grafischen Darstellung des zweiten Fahrzeugs. Die generierte grafische Darstellung des zweiten Fahrzeugs kann daraufhin in die generierte Umgebungsszene integriert werden. Beispielsweise kann die generierte grafische Darstellung des zweiten Fahrzeugs halbtransparent in die generierte Umgebungsszene eingeblendet werden. Ebenso ist es möglich, beispielsweise die Außenumrisse des zweiten Fahrzeugs in der generierten Umgebungsszene als Linien oder ähnliches darzustellen. Auf diese Weise erhält ein Fahrzeugführer in der dargestellten Umgebungsszene zusätzlich eine Information über die Position des zweiten Fahrzeugs in der Umgebung.

Gemäß einer Ausführungsform wird in dem Schritt zum Generieren einer grafischen Darstellung des zweiten Fahrzeugs ein dreidimensionales Modell des zweiten Fahrzeugs generiert. Anschließend können erste Bilddaten des zweiten Fahrzeugs auf Außenflächen des generierten dreidimensionalen Modells des zweiten Fahrzeugs projiziert werden. Somit ist eine besonders realistische Darstellung der zweiten Fahrzeugs in der Umgebungsszene möglich.

Gemäß einer weiteren Ausführungsform umfasst das Verfahren zum Anzeigen einer Umgebungsszene eines Fahrzeuggespanns einen Schritt zum Transformieren der sensorisch erfassten ersten Bilddaten und der sensorisch erfassten zweiten Bilddaten in eine vorbestimmte Projektionsfläche. Der Schritt zum Fusionieren der ersten Bilddaten und der zweiten Bilddaten kann daraufhin die Umgebungsszene unter Verwendung der transformierten ersten Bilddaten und der transformierten zweiten Bilddaten generieren. Bei der Transformation in eine vorbestimmte Projektionsfläche kann es sich beispielsweise um eine Projektion der Bilddaten in eine Vogelperspektive (bird-eye view), einer Transformation der Bilddaten in die Ebene der Fahrbahn, auf der sich das erste Fahrzeug und das zweite Fahrzeug befinden, eine Projektion der Bilddaten auf die Außenflächen des zweiten Fahrzeugs oder eine beliebige andere Projektionsfläche / -ebene handeln. Durch die Transformation der Bilddaten vor der Fusionierung in eine vorbestimmte Projektionsfläche ist daraufhin eine besonders einfache Fusionierung der Bilddaten möglich.

Gemäß einer weiteren Ausführungsform umfasst das Verfahren zum Anzeigen einer Umgebungsszene eines Fahrzeuggespanns einen Schritt zum Transformieren der generierten Umgebungsszene in eine vorbestimmte Perspektive. Durch die Transformation der generierten Umgebungsszene in eine vorbestimmte Perspektive, beispielsweise in die Vogelperspektive oder eine beliebige andere Projektionsebene können einem Fahrzeugführer die fusionierten Bilddaten in einer Ansicht dargestellt werden, die ein besonders effizientes Erfassen der Bilddaten ermöglicht.

Gemäß einer weiteren Ausführungsform werden die ersten Bilddaten und die zweiten Bilddaten jeweils durch mindestens eine Kamera der ersten Fahrzeugsensoreinheit bzw. der zweiten Fahrzeugsensoreinheit geliefert. Alternativ sind auch Fahrzeugsensoreinheiten mit mehr als einer Kamera möglich.

Gemäß einer weiteren Ausführungsform umfasst das Verfahren zum Anzeigen einer Umgebungsszene einen Schritt zum Berechnen von extrinsischen Parametern der zweiten Fahrzeugsensoreinheit. Insbesondere kann dieser Schritt das Berechnen von extrinsischen Kameraparametern einer Kamera der zweiten Fahrzeugsensoreinheit umfassen. Die extrinsischen Kameraparameter beschreiben die Position und Orientierung der zweiten Fahrzeugsensoreinheit im Raum, insbesondere Position und Orientierung der zweiten Fahrzeugsensoreinheit in Bezug auf das erste Fahrzeug bzw. die erste Fahrzeugsensoreinheit. Die extrinsischen Kameraparameter können dabei Translation der zweiten Fahrzeugsensoreinheit in Bezug auf die erste Fahrzeugsensoreinheit in x-, y- und z-Richtung sowie Rotation um die x-Achse, die y-Achse und die z-Achse umfassen.

Gemäß einer weiteren Ausführungsform werden die extrinsischen Parameter der zweiten Fahrzeugsensoreinheit in Echtzeit berechnet. Insbesondere können für jedes Bild (frame) eine Kamera der zweiten Fahrzeugsensoreinheit die extrinsischen Parameter separat berechnet werden.

Gemäß einer weiteren Ausführungsform umfasst die Vorrichtung zum Anzeigen einer Umgebungsszene eines Fahrzeuggespanns einen Grafikprozessor (GPU). Grafikprozessoren eignen sich besonders gut für eine effiziente Verarbeitung von Bild- bzw. Grafikdaten. Auf diese Weise ist eine Entzerrung der von der ersten Fahrzeugsensoreinheit bzw. der zweiten Fahrzeugsensoreinheit bereitgestellten Bilddaten, eine Transformation der Bilddaten in eine gewünschte Perspektive, die Bestimmung der extrinsischen Kameraparameter sowie die Fusionierung der ersten Bilddaten und der zweiten Bilddaten durch einen entsprechenden Grafikprozessor besonders effizient möglich. Insbesondere wird durch die Verwendung eines Grafikprozessors die Verarbeitung der entsprechenden Daten in Echtzeit ermöglicht. Gemäß einer weiteren Ausführungsform umfasst die Vorrichtung zum Anzeigen einer Umgebungsszene ferner einen Lagesensor, der dazu ausgelegt ist, einen Winkel und/oder einen Abstand zwischen dem ersten Fahrzeug und dem zweiten Fahrzeug zu erfassen. Der so erfasste Winkel bzw. Abstand kann anschließend an der Berechnungseinheit bereitgestellt werden. Durch die Verwendung einer externen bzw. separaten Lagesensoreinheit ist eine einfache und präzise Auswertung von Winkel bzw. Abstand zwischen erstem Fahrzeug und zweitem Fahrzeug möglich.

Gemäß einer weiteren Ausführungsform umfasst die erste Fahrzeugsensoreinheit/oder die zweite Fahrzeugsensoreinheit jeweils mindestens eine Fahrzeugkamera.

Die vorliegende Erfindung schafft ferner ein Surround-View-System für ein Fahrzeuggespann mit einem ersten Fahrzeug und einem mit dem ersten Fahrzeug mechanisch gekoppelten zweiten Fahrzeug. Das Surround-View-System umfasst eine erfindungsgemäße Vorrichtung zum Anzeigen einer Umgebungsszene und eine Fahrzeuganzeige, die in dem ersten Fahrzeug angeordnet ist, und die dazu ausgelegt ist, die generierten Umgebungsszene anzuzeigen.

Weitere Ausführungsformen und Vorteile der vorliegenden Erfindung ergeben sich aus der nachfolgenden Beschreibung unter Bezug auf die beigefügten Zeichnungen.

Dabei zeigen:
- Figur 1:: eine schematische Darstellung eines Fahrzeuggespanns;
- Figur 2:: eine schematische Darstellung der Erfassungsbereiche der Fahrzeugsensoreinheiten, wie sie einer Ausführungsform der vorliegenden Erfindung zugrundeliegen;
- Figur 3:: eine schematische Darstellung einer Vorrichtung zum Anzeigen einer Umgebungsszene gemäß einer Ausführungsform;
- Figur 4:: eine schematische Darstellung einer Umgebungsszene, wie sie gemäß einer Ausführungsform generiert worden ist; und
- Figur 5:: eine schematische Darstellung eines Ablaufdiagramms, wie es einem Verfahren gemäß einer Ausführungsform zugrundeliegt.

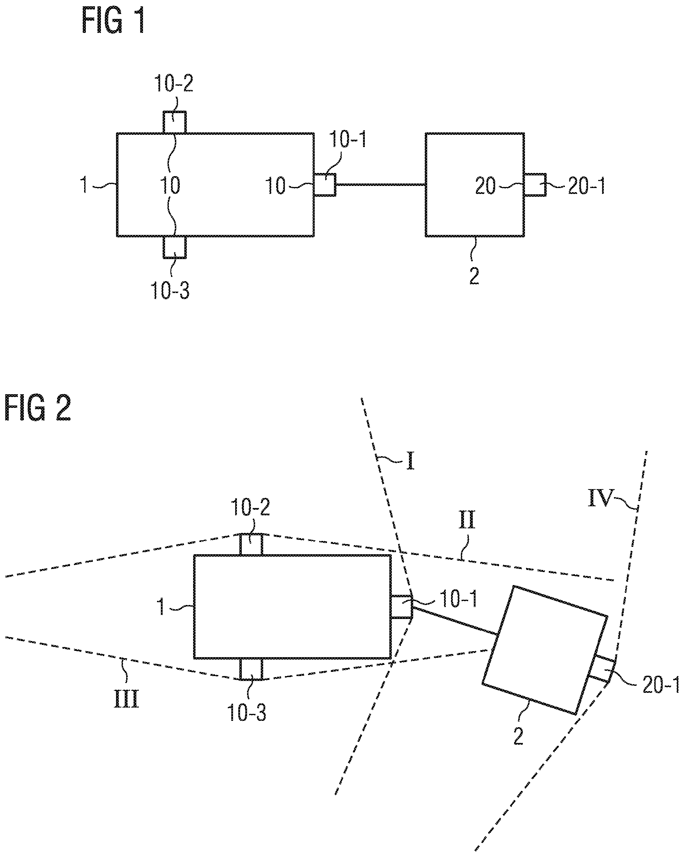

Figur 1 zeigt eine schematische Darstellung eines Fahrzeuggespanns aus einem ersten Fahrzeug 1 und einem zweiten Fahrzeug 2. Das erste Fahrzeug 1 und das zweite Fahrzeug 2 sind dabei mechanisch miteinander gekoppelt. Bei dem Fahrzeuggespann kann es sich dabei um ein beliebiges Fahrzeuggespann aus zwei Fahrzeugen handeln. Beispielsweise kann es sich bei dem ersten Fahrzeug 1 um einen Personenkraftwagen (PKW) handeln, an dem ein Anhänger angekoppelt ist. Ebenso kann das Fahrzeuggespann auch aus einem Lastkraftwagen (LKW) mit einem entsprechenden Anhänger oder aus einer Zugmaschine mit Sattelanhänger bestehen. Darüber hinaus ist die vorliegende Erfindung nicht auf die zuvor beschriebenen Gespanne beschränkt, sondern kann auch auf beliebige Gespanne aus zwei miteinander gekoppelten Fahrzeugen bestehen. Neben straßengebundenen Gespannen aus zwei miteinander gekoppelten Fahrzeugen sind darüber hinaus auch weitere Gespanne möglich, beispielsweise auch Wasserfahrzeuge als Schub- oder Zugverband. Zum besseren Verständnis wird die vorliegende Erfindung im Nachfolgenden anhand eines Gespanns aus einem ersten Fahrzeug 1 in Form eines Zugfahrzeugs und einem zweiten Fahrzeug 2 in Form eines mit dem Zugfahrzeug gekoppelten Anhängers näher erläutert.

An dem ersten Fahrzeug 1 ist dabei eine erste Fahrzeugsensoreinheit 10 angeordnet. Diese erste Fahrzeugsensoreinheit 10 kann dabei insbesondere eine oder mehrere Fahrzeugkameras 10-i umfassen. Darüber hinaus kann die erste Fahrzeugsensoreinheit 10 auch weitere Sensoren, insbesondere bildgebende Sensoren umfassen. In dem hier dargestellten Beispiel umfasst die Fahrzeugsensoreinheit 10 eine Rückfahrkamera 10-1, sowie zwei Seitenkameras 10-2 und 10-3. Beispielsweise kann die Rückfahrkamera 10-1 an einem hinteren Stoßfänger oder einer Heckklappe des ersten Fahrzeug 1 angeordnet sein. Darüber hinaus sind auch beliebige weitere Positionen möglich, die es ermöglichen, die rückwärtige Umgebung des ersten Fahrzeugs 1 zu erfassen. Die beiden Seitenkameras 10-2 und 10-3 sind jeweils an der linken bzw. rechten Seite des Fahrzeugs 1 angeordnet. Beispielsweise können die beiden seitlichen Kameras 10-2 und 10-3 an den Außenspiegel des Fahrzeugs 1 angeordnet sein. Darüber hinaus sind auch hier beliebige weitere seitliche Positionen für das Anbringen dieser Kameras möglich. Ferner kann die erste Fahrzeugsensoreinheit 10 auch weitere Kameras umfassen. Beispielsweise kann die erste Fahrzeugsensoreinheit 10 auch eine nach vorne gerichtete Kamera (hier nicht dargestellt) umfassen. Bei den Kameras 10-i kann es sich dabei um Kameras mit einem sehr breiten Öffnungswinkel handeln. Insbesondere sind Kameras mit einem sogenannten FischaugenObjektiv möglich. Zur Erfassung eines möglichst großen Außenbereichs um das Fahrzeug 1 herum können die einzelnen Kameras 10-i dabei zumindest in horizontale Richtung einen Öffnungswinkel von 180° und gegebenenfalls auch mehr aufweisen.

Analog zu der ersten Fahrzeugsensoreinheit 1 mit den entsprechenden Fahrzeugkameras 10-i ist auch an dem mit dem ersten Fahrzeug 1 gekoppelten zweiten Fahrzeug 2 eine zweite Fahrzeugsensoreinheit 20 angeordnet. In dem hier dargestellten Ausführungsbeispiel umfasst die zweite Fahrzeugsensoreinheit 20 nur eine Kamera 20-1. Darüber hinaus kann jedoch auch die zweite Fahrzeugsensoreinheit 20 mehrere Fahrzeugkameras umfassen. Beispielsweise ist es auch möglich, auch an dem zweiten Fahrzeug 2 neben der dargestellten rückwärtigen Kamera 20-1 auch noch an den Außenseiten weitere Kameras (hier nicht dargestellt) anzuordnen. Für die Kameras der zweiten Fahrzeugsensoreinheit 20 gelten die Ausführungen, wie sie bereits im Zusammenhang mit den Kameras 10-i der ersten Fahrzeugsensoreinheit 10 beschrieben wurden. Insbesondere kann auch die Kamera der zweiten Fahrzeugsensoreinheit 20 zumindest in horizontaler Richtung einen Öffnungswinkel von 180° oder mehr aufweisen.

Die Übertragung der zweiten Bilddaten zu dem ersten Fahrzeug 1 kann dabei auf beliebige Weise kabelgebunden oder auch kabellos erfolgen. Beispielsweise ist eine kabelgebundene Übertragung mittels eines digitalen Bussystems möglich. Darüber hinaus ist auch eine kabellose Übertragung der Bilddaten mittels Funk oder ähnlichem möglich. Beispielsweise könnend die Bilddaten mittels Bluetooth, WLAN oder einem anderen Funkstandard übertragen werden.

Figur 2 zeigt eine schematische Darstellung der horizontalen Abbildungsbereiche der Fahrzeugkameras 10-i und 20-i der ersten Fahrzeugsensoreinheit 10 und der zweiten Fahrzeugsensoreinheit 20. Der Erfassungsbereich der rückwärtigen Kamera 10-i der ersten Fahrzeugsensoreinheit 10 an dem ersten Fahrzeug 1 ist dabei mit "I" gekennzeichnet. Die seitlichen Erfassungsbereiche der Seitenkameras 10-2 und 10-3 der ersten Fahrzeugsensoreinheit 10 des ersten Fahrzeugs 1 sind mit "II" und "III" gekennzeichnet. Der Erfassungsbereich der rückwärtigen Kamera 20-1 der zweiten Fahrzeugsensoreinheit 20 an dem zweiten Fahrzeug 2 ist mit "IV" gekennzeichnet. Wie aus dieser Darstellung zu erkennen ist, kann durch eine derartige Anordnung der Kameras 10-i und 20-i der ersten Fahrzeugsensoreinheit 10 und der zweiten Fahrzeugsensoreinheit 20 selbst bei einem in Bezug auf das erste Fahrzeug 1 abgewinkelten zweiten Fahrzeug 2 ein sehr großer Bereich der Umgebung um das Fahrzeuggespann aus erstem Fahrzeug 1 und zweitem Fahrzeug 2 erfasst werden. Durch die Anordnung von gegebenenfalls weiteren Kameras an dem zweiten Fahrzeug 2 kann der Erfassungsbereich darüber hinaus gerade bei abgewinkeltem zweitem Fahrzeug 2 noch zusätzlich ergänzt werden.

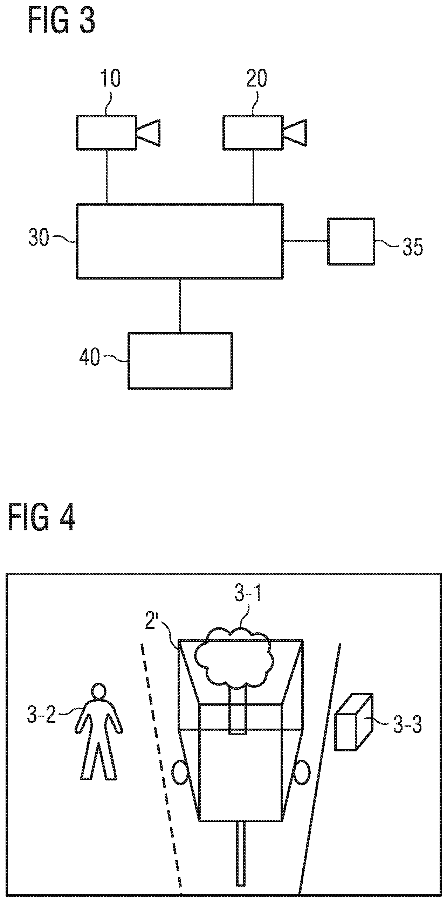

Figur 3 zeigt eine schematische Darstellung einer Vorrichtung zum Anzeigen einer Umgebungsszene eines Fahrzeuggespanns gemäß einer Ausführungsform. Wie zuvor beschrieben, können dabei durch eine oder mehrere Kameras 10-i einer ersten Fahrzeugsensoreinheit 10 die Bereiche um das erste Fahrzeug 1 erfasst werden. Die erste Fahrzeugsensoreinheit 10 an dem ersten Fahrzeug 1 stellt dabei sensorisch erfasste erste Bilddaten bereit. Diese Bilddaten können beispielsweise eine Sequenz von periodisch erfassten Einzelbildern der einzelnen Fahrzeugkameras 10-i umfassen. Vorzugsweise stellen die einzelnen Kameras 10-i der ersten Fahrzeugsensoreinheit 10 die einzelnen Kamerabilder dabei mit einer gemeinsamen Bildwiederholrate bereit. Diese Bildwiederholrate kann dabei konstant sein. Alternativ ist es auch möglich, die Bildwiederholrate in Abhängigkeit von weiteren Parametern, wie zum Beispiel der Fahrzeuggeschwindigkeit oder ähnlichem, anzupassen. Weiterhin werden auch durch eine oder mehrere Fahrzeugkameras 20-i der zweiten Fahrzeugsensoreinheit 20 an dem zweiten Fahrzeug 2 ebenfalls Bilddaten von der Umgebung des zweiten Fahrzeugs 2 bereitgestellt. Auch bei diesen Bilddaten kann es sich um Einzelbilder oder eine Sequenz von aufeinanderfolgenden Bildern mit fester oder variabler Bildwiederholrate handeln. Vorzugsweise weisen die von der zweiten Fahrzeugsensoreinheit 20 bereitgestellten Bilddaten dabei die gleiche Bildwiederholrate auf wie die von der ersten Fahrzeugsensoreinheit 10 bereitgestellten Bilddaten.

Die erste Fahrzeugsensoreinheit 10 und die zweite Fahrzeugsensoreinheit 20 stellen ihre Bilddaten dabei an einer Berechnungseinheit 30 bereit. In der Berechnungseinheit 30 werden die von den einzelnen Kameras 10-i und 20-i bereitgestellten Bilddaten aufbereitet und zu einer gemeinsamen Umgebungsszene fusioniert. Der Ablauf zur Generierung einer gemeinsamen Umgebungsszene wird im Nachfolgenden noch näher beschrieben. Nachdem die Bilddaten der ersten Fahrzeugsensoreinheit 10 und der zweiten Fahrzeugsensoreinheit 20 in der Berechnungseinheit 30 zu einer gemeinsamen Umgebungsszene fusioniert worden sind, kann die gemeinsame Umgebungsszene an der Anzeigeneinheit 40 angezeigt werden. Zusätzlich oder alternativ ist es auch möglich, die so aufbereitete Umgebungsszene von einer Komponente eines Fahrassistenzsystems auszuwerten und basierend auf der Auswertung gegebenenfalls in das Fahrverhalten des Gespanns, insbesondere des ersten Fahrzeugs 1, durch das das Gespann gesteuert wird, einzugreifen.

Für die Generierung der Umgebungsszene in der Berechnungseinheit 30 werden dabei die ersten Bilddaten von der ersten Fahrzeugsensoreinheit 10 und die zweiten Bilddaten von der zweiten Fahrzeugsensoreinheit 20 in einem gemeinsamen Bezugssystem fusioniert. Vorzugsweise werden dabei die zweiten Bilddaten von der zweiten Fahrzeugsensoreinheit 20 in das Bezugssystem des ersten Fahrzeugs 1 mit der ersten Fahrzeugsensoreinheit 10 überführt. Auf diese Weise ergibt sich für die generierte Umgebungsszene eine Darstellung, die sowohl die ersten Bilddaten der ersten Fahrzeugsensoreinheit 10 als auch die zweiten Bilddaten der zweiten Fahrzeugsensoreinheit 20 umfasst und dabei die Umgebung des Fahrzeuggespanns aus der Sicht des ersten Fahrzeugs 1 darstellt. Dies ermöglicht einem Fahrzeugführer in dem ersten Fahrzeug 1 eine effiziente und einfache Erfassung der Fahrzeugumgebung.

Da es sich während des Manövrierens des Fahrzeuggespanns mit dem ersten Fahrzeug 1 und dem mit dem ersten Fahrzeug 1 mechanisch gekoppelten zweiten Fahrzeug 2 die Stellung des zweiten Fahrzeugs 2 in Bezug auf das erste Fahrzeug 1 verändern kann, müssen vor dem Fusionieren der ersten Bilddaten und der zweiten Bilddaten jeweils die räumliche Lage der beiden Fahrzeuge 1 und 2 zueinander ermittelt werden. Hierzu kann beispielsweise die Stellung des zweiten Fahrzeugs 2 in Bezug auf das erste Fahrzeug 1 mittels einer Lagesensoreinheit 35 erfasst werden. Insbesondere kann dabei ein Winkel α erfasst werden, der eine Winkelstellung des zweiten Fahrzeugs in Bezug auf das erste Fahrzeug 1 spezifiziert. Zusätzlich oder alternativ kann die Lagesensoreinheit 35 auch einen Abstand zwischen dem ersten Fahrzeug 1 und dem zweiten Fahrzeug 2 erfassen und an der Berechnungseinheit 30 bereitstellen.

Neben der Erfassung der räumlichen Lage des zweiten Fahrzeugs 2 in Bezug auf das erste Fahrzeug 1 mittels einer Lagesensoreinheit 35 ist es zusätzlich oder alternativ auch möglich, die Lage des zweiten Fahrzeugs 2 in Bezug auf das erste Fahrzeug 1 unter Verwendung der sensorisch erfassten Bilddaten, insbesondere der ersten Bilddaten von der ersten Fahrzeugsensoreinheit 10 zu ermitteln. Hierzu kann die Berechnungseinheit 30 in den bereitgestellten ersten Bilddaten von der ersten Fahrzeugsensoreinheit 10 eine Objektdetektion durchführen. Wird in dieser Objektdetektion in den ersten Bilddaten von der ersten Fahrzeugsensoreinheit 10 ein zweites Fahrzeug 2 detektiert, so kann aus der Position des detektierten zweiten Fahrzeugs 2 in den ersten Bilddaten auf die räumliche Lage des zweiten Fahrzeugs 2 in Bezug auf das erste Fahrzeug 1 geschlossen werden. Durch Analyse der Größe und der Position des detektierten Fahrzeugs 2 in den ersten Bilddaten kann auf den Abstand zwischen dem ersten Fahrzeug 1 und dem zweiten Fahrzeug 2 sowie auf die Winkelstellung zwischen dem ersten Fahrzeug 1 und dem zweiten Fahrzeug 2 geschlossen werden. Darüber hinaus sind auch weitere Verfahren bzw. Sensoren zur Ermittlung der räumlichen Lage zwischen dem ersten Fahrzeug 1 und dem zweiten Fahrzeug 2 möglich. Beispielsweise kann die räumliche Lage zwischen dem ersten Fahrzeug 1 und dem zweiten Fahrzeug 2 auch mittels Radar, Ultraschall, Lichtsensoren oder ähnlichem ermittelt werden.

Aus der räumlichen Lage des zweiten Fahrzeugs 2 in Bezug auf das erste Fahrzeug 1 kann somit auch auf die Position der zweiten Fahrzeugsensoreinheit 20 und auf die Lage der Kameras 20-i der zweiten Fahrzeugsensoreinheit 20 geschlossen werden. Insbesondere kann durch die zuvor beschriebene Sensorik bzw. Analyse der ersten Bilddaten ein Satz extrinsischer Parameter für die zweite Fahrzeugsensoreinheit 20 ermittelt werden. Diese extrinsischen Parameter der zweiten Fahrzeugsensoreinheit 20 können dabei beispielsweise einen translatorischen Versatz in den Raumrichtungen (x-, y-, z-Achse) sowie gegebenenfalls auch Rotationen um die Raumachsen beschreiben. Die so ermittelten extrinsischen Parameter der zweiten Fahrzeugsensoreinheit 20 entsprechen dabei extrinsischen Kameraparametern für eine Aufbereitung der Bilddaten von der zweiten Fahrzeugsensoreinheit 20. Umfasst die zweite Fahrzeugsensoreinheit 20 dabei mehr als eine Kamera 20-i, so können für jede dieser Kameras 20-i separate extrinsische Kameraparameter ermittelt werden.

Werden durch die erste Fahrzeugsensoreinheit 10 und die zweite Fahrzeugsensoreinheit 20 dabei Bildsequenzen mit mehreren aufeinanderfolgenden Bildern bereitgestellt, so kann für jedes Einzelbild der Bildfolge eine separate, erneute Bestimmung der Lage von zweitem Fahrzeug 2 in Bezug auf das erste Fahrzeug 1 bzw. der korrespondierenden extrinsischen Parameter erfolgen. Gegebenenfalls kann auch für eine vorbestimmte Anzahl von aufeinanderfolgenden Bildern jeweils ein gemeinsamer Satz von extrinsischen Parametern ermittelt werden, um die Rechenlast zu reduzieren.

Basierend auf der ermittelten Lage des zweiten Fahrzeugs 2 in Bezug auf das erste Fahrzeug 1 bzw. den ermittelten extrinsischen Parametern für die zweite Fahrzeugsensoreinheit 20 und insbesondere der extrinsischen Kameraparameter für jede Kamera 20-i der zweiten Fahrzeugsensoreinheit 20 können daraufhin alle bereitgestellten Bilddaten der ersten Fahrzeugsensoreinheit 10 und der zweiten Fahrzeugsensoreinheit 20 miteinander zu einer gemeinsamen Umgebungsszene fusioniert werden. Hierzu können beispielsweise zunächst die Bilddaten jeder einzelnen Fahrzeugkamera 10-i und 20-i der ersten Fahrzeugsensoreinheit 10 und der zweiten Fahrzeugsensoreinheit 20 entzerrt und in eine gemeinsame Projektionsebene transformiert werden. Die Entzerrung der Bilddaten der einzelnen Fahrzeugkameras kann dabei insbesondere die aufgrund des großen Öffnungswinkels (Fischaugenobjektiv) gegebenenfalls verzerrten Bilddaten aufbereiten und in ein gleichförmiges Raster überführen. Die Transformation der Bilddaten in eine vorgegebene Projektionsebene kann dabei die Bilddaten beispielsweise in eine Perspektive von oben (Vogelperspektive) oder gegebenenfalls auch in eine Projektionsebene senkrecht zur Fahrbahn überführen. Darüber hinaus sind Transformationen in beliebige weitere Projektionsebenen ebenfalls möglich.

Die ersten Bilddaten, insbesondere die zuvor aufbereiteten einzelnen Bilddaten der Kameras 10-i der ersten Fahrzeugsensoreinheit 10 und die entzerrten und entsprechend den extrinsischen Parametern kompensierten zweiten Bilddaten der zweiten Fahrzeugsensoreinheit 20 werden daraufhin zu einer gemeinsamen Gesamtszene fusioniert. Dabei werden die aufbereiteten ersten Bilddaten und die aufbereiteten zweiten Bilddaten zu einer Gesamtszene der Umgebung fusioniert, bei der die Bilder der einzelnen Fahrzeugkameras 10-i und 20-i möglichst nahtlos ineinander übergehen.

Die Aufbereitung der ersten Bilddaten und der zweiten Bilddaten, wie zum Beispiel das Entzerren der Bilddaten, die beispielsweise aufgrund von Objektiven mit einer großen Öffnungsbreite verzerrt sind, das Aufbereiten der Bilddaten basierend auf den extrinsischen Parametern, das Transformieren der Bilddaten in eine vorbestimmte Bildebene, etc. kann dabei insbesondere durch einen Grafikprozessor in der Berechnungseinheit 30 durchgeführt werden. Derartige Grafikprozessoren (GPU) sind für die Verarbeitung von Bilddaten optimiert und ermöglichen im Vergleich zu konventionellen Prozessoren eine leistungsfähige Verarbeitung der Bilddaten. Insbesondere kann die Aufbereitung der Bilddaten in einem solchen Grafikprozessor durch geeignete Shader-Programme ausgeführt werden. Sofern nicht bereits zuvor erfolgt, kann auch nach der Fusionierung der Bilddaten von der ersten Bildsensoreinheit 10 und der zweiten Bildsensoreinheit 20 gegebenenfalls auch anschließend die generierte Umgebungsszene in eine vorbestimmte Projektionsebene transformiert werden. Bei dieser Projektionsebene kann es sich ebenfalls beispielsweise um eine Draufsicht auf das Fahrzeuggespann von oben (Vogelperspektive) eine Projektion der Bilddaten in die Fahrbahnebene oder in eine Ebene senkrecht zur Fahrbahn und gegebenenfalls auch eine Ebene senkrecht zur Bewegungsrichtung des ersten Fahrzeugs 1 handeln. Darüber hinaus sind beliebige weitere Projektionsebenen ebenso möglich.

Zur weiteren Unterstützung des Fahrzeugführers wird in die generierte Umgebungsszene gegebenenfalls noch zusätzlich eine Information über das zweite Fahrzeug 2 in Bezug auf das erste Fahrzeug 1 eingeblendet. Es wird in der Berechnungseinheit 30 basierend auf vorbestimmten Modelldaten oder basierend auf den Detektionsergebnissen für die Detektion des zweiten Fahrzeugs in den ersten Bilddaten 1 der ersten Fahrzeugsensoreinheit 10 ein grafisches Modell des zweiten Fahrzeugs 2 erstellt. Bei diesem grafischen Modell des zweiten Fahrzeugs 2 kann es sich beispielsweise um einen einfachen kubischen Körper mit den Abmessungen des zweiten Fahrzeugs 2 handeln. Ferner ist es auch möglich, ein Linienmodell mit den Außenumrissen des zweiten Fahrzeugs 2 zu generieren. Auch eine möglichst detailgetreue Modellierung bzw. Darstellung des zweiten Fahrzeugs 2 basierend auf den ersten Bilddaten 1 und/oder weiteren vorab gespeicherten Modelldaten ist möglich. Ein derartiges Modell des zweiten Fahrzeugs 2 wird daraufhin mit der generierten Umgebungsszene kombiniert. Beispielsweise kann das generierte Modell als halbtransparentes Objekt mit in die generierte Umgebungsszene integriert werden. Aber auch eine vollständige Überlagerung, beispielsweise eines Linienmodells mit den Außenumrissen und der generierten Umgebungsszene ist möglich.

Für eine realistische Darstellung des zweiten Fahrzeugs 2 in der generierten Umgebungsszene, kann dabei für das zweite Fahrzeug 2 beispielsweise auch ein dreidimensionales Modell generiert werden. Hierzu kann insbesondere eine bekannte räumliche Lage der einzelnen Kameras 10-i der ersten Fahrzeugsensoreinheit 10 an dem ersten Fahrzeug 1 verwendet werden, um aus den Bilddaten in der einzelnen Kameras 10-i ein räumliches Modell des zweiten Fahrzeugs 2 zu berechnen. Für die Berechnung des räumlichen Modells des zweiten Fahrzeugs 2 können dabei beispielsweise die Bilddaten in der beiden Kameras 10-2 und 10-3 an den beiden Außenseiten des ersten Fahrzeugs 1 verwendet werden. Nach dem ein dreidimensionales Modell des zweiten Fahrzeugs 2 berechnet worden ist, können daraufhin die ersten Bilddaten der Kameras 10-i der ersten Fahrzeugsensoreinheit 10 auf die Außenflächen des generierten dreidimensionalen Modells des zweiten Fahrzeugs 2 projizierte werden. Insbesondere werden dabei diejenigen Ausschnitte in der ersten Bilddaten auf die Außenflächen des Modells des zweiten Fahrzeugs 2 projiziert, die zu den entsprechenden Flächen des zweiten Fahrzeugs 2 korrespondieren. Anschließend kann das so generierte dreidimensionale Modell mit den darauf projizierten Bereichen der ersten Bilddaten in die generierte Umgebungsszene integriert werden. Beispielsweise kann hierzu zunächst eine zweidimensionale Projektion des generierten dreidimensionalen Modells des zweiten Fahrzeugs 2 mit den darauf projizierten Bereichen der ersten Bilddaten berechnet werden. Die zweidimensionale Projektion entspricht dabei einer Projektion in eine Ebene, die mit der Ebene der generierten Umgebungsszene korrespondiert. Diese zweidimensionale Projektion des dreidimensionalen Modells des zweiten Fahrzeugs 2 kann daraufhin in die generierte Umgebungsszene integriert werden. Beispielsweise kann die zweidimensionale Projektion des dreidimensionalen Modells des zweiten Fahrzeugs 2 dabei teilweise mit der generiert Umgebungsszene überlagert werden. Auf diese Weise sind für einen Fahrzeugführer beim Betrachten der so generierten Überlagerung aus Umgebungsszene und Modelle des zweiten Fahrzeugs 2 sowohl die Umgebungsszene als auch die Positionen des zweiten Fahrzeugs 2 in der Umgebungsszene sofort ersichtlich.

Das Einblenden des zweiten Fahrzeugs 2 in der generierten Umgebungsszene kann dabei optional individuell aktiviert bzw. deaktiviert werden. Beispielsweise kann basierend auf einer Benutzereingabe das Einblenden des zweiten Fahrzeugs zwei in der generierten Umgebungsszene individuell zugeschaltet werden. Ein Benutzer kann hierzu zum Beispiel mittels einer geeigneten Eingabevorrichtung, beispielsweise einem Schalter an der Anzeigeeinheit 40 oder einem anderen Eingabeelement, die Überlagerung der generierten Umgebungsszene mit Bilddaten des zweiten Fahrzeugs 2 aktivieren oder deaktivieren. Gemäß der Erfindung erfolgt die Einblendung des zweiten Fahrzeugs 2 in der generiert Umgebungsszene automatisch. Hierzu werden vorbestimmte Fahrsituationen bzw. -manöver detektiert, die daraufhin ein Einblenden des zweiten Fahrzeugs 2 in der generierten Umgebungsszene aktivieren bzw. deaktivieren. Ferner ist es auch möglich, den Grad der Transparenz für das zweite Fahrzeug 2 werde Überlagerung mit der Umgebungsszene individuell, beispielsweise basierend auf einer Benutzereingabe, anzupassen.

Weitere Möglichkeiten zur Kombination eines generierten Modells des zweiten Fahrzeugs 2 mit der generierten Umgebungsszene sind darüber hinaus ebenso möglich. Auch diese Überlagerung des generierten Modells für das zweite Fahrzeug 2 mit der generierten Umgebungsszene kann dabei durch einen Grafikprozessor in der Berechnungseinheit 30 erfolgen.

Insbesondere durch die Verwendung eines Grafikprozessors in der Berechnungseinheit 30 kann dabei die Bestimmung der extrinsischen Parameter für die zweite Fahrzeugsensoreinheit 20 sowie gegebenenfalls für mehrere Kameras 20-i der zweiten Fahrzeugsensoreinheit 20 in Echtzeit erfolgen. Die hohe Leistungsfähigkeit von Grafikprozessoren ermöglicht dabei die individuelle Ermittlung von extrinsischen Parametern sowie die Fusionierung aller Bilddaten in Echtzeit. Dabei können bei Bildsequenzen mit mehreren aufeinanderfolgenden Einzelbildern die extrinsischen Parameter sowie die Fusionierung für jedes Bild der Bildfolge separat ausgeführt werden.

Figur 4 zeigt eine schematische Darstellung einer generierten Umgebungsszene mit einem überlagernden Fahrzeugmodell, wie es gemäß einer Ausführungsform generiert worden ist. Dabei wurden die Bilddaten aller Kameras der ersten Fahrzeugsensoreinheit 10 und die Bilddaten der Kameras der zweiten Fahrzeugsensoreinheit 20 miteinander fusioniert. Ein Fahrzeugführer kann dabei neben den Objekten 3-2 und 3-3 seitlich des zweiten Fahrzeugs 2 auch ein Objekt 3-1 erkennen, das sich hinter dem zweiten Fahrzeug 2 befindet. Aufgrund der Aufbereitung der Bilddaten, insbesondere der zweiten Bilddaten von der zweiten Fahrzeugsensoreinheit 20, wird die gesamte Umgebungsszene dabei in einer Perspektive dargestellt, die sich bei einem Blick aus dem ersten Fahrzeug 1 ergibt. Zur besseren

Orientierung für den Fahrzeugführer ist dabei auch ein Linienmodell 2' des zweiten Fahrzeugs 2 in die generierte Umgebungsszene integriert.

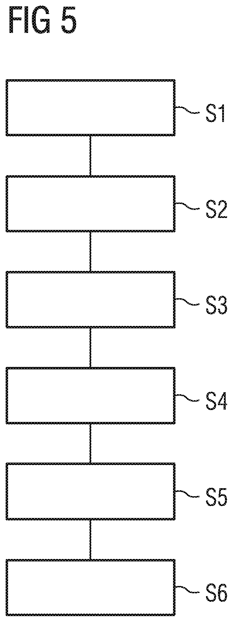

Figur 5 zeigt eine schematische Darstellung eines Ablaufdiagramms, wie es einem Verfahren zum Anzeigen einer Umgebungsszene eines Fahrzeuggespanns gemäß einer Ausführungsform zugrundeliegt. In einem ersten Schritt S1 werden erste Bilddaten bereitgestellt, die mittels einer an einem ersten Fahrzeug angeordneten ersten Fahrzeugsensoreinheit sensorisch erfasst werden. Wie bereits zuvor ausgeführt, kann die erste Fahrzeugsensoreinheit 10 dabei eine oder mehrere Fahrzeugkameras 10-i umfassen. In einem weiteren Schritt S2 werden zweite Bilddaten bereitgestellt. Diese zweiten Bilddaten werden mittels einer an einem zweiten Fahrzeug angeordneten zweiten Fahrzeugsensoreinheit 20 sensorisch erfasst. Das zweite Fahrzeug 2 ist dabei mechanisch mit dem ersten Fahrzeug 1 gekoppelt. Das erste Fahrzeug 1 und das zweite Fahrzeug 2 bilden somit ein Fahrzeuggespann.

In Schritt S3 wird daraufhin eine räumliche Lage des zweiten Fahrzeugs in Bezug auf das erste Fahrzeug 1 ermittelt. Die räumliche Lage des zweiten Fahrzeugs 2 in Bezug auf das erste Fahrzeug 1 kann dabei mittels einer separaten Lagesensoreinheit 35 erfasst werden. Zusätzlich oder alternativ kann auch die räumliche Lage des zweiten Fahrzeugs 2 in Bezug auf das erste Fahrzeug 1 basierend auf den durch die erste Fahrzeugsensoreinheit 10 bereitgestellten ersten Bilddaten erfolgen. Hierzu kann das zweite Fahrzeug 2 in den bereitgestellten ersten Bilddaten detektiert werden. Basierend auf Größe und räumlicher Lage des detektierten zweiten Fahrzeugs 2 in den ersten Bilddaten kann daraufhin die räumliche Lage des zweiten Fahrzeugs 2 in Bezug auf das erste Fahrzeug 1 ermittelt werden. Die räumliche Lage kann dabei insbesondere einen Winkel zwischen dem ersten Fahrzeug 1 und dem zweiten Fahrzeug 2 sowie einen Abstand zwischen den beiden Fahrzeugen umfassen. Basierend auf der ermittelten räumlichen Lage zwischen den beiden Fahrzeugen können daraufhin extrinsische Parameter für die zweite Fahrzeugsensoreinheit 20 berechnet werden. Diese extrinsischen Parameter können eine Translation der zweiten Fahrzeugsensoreinheit 20 in Bezug auf das erste Fahrzeug bzw. die erste Fahrzeugsensoreinheit 10 in die drei Raumrichtungen umfassen. Weiterhin können die extrinsischen Parameter jeweils eine Rotation um die Achsen der Raumrichtungen spezifizieren. Umfasst die zweite Fahrzeugsensoreinheit 20 dabei mehrere Kameras 20-i, so kann für jede dieser Kameras 20-i ein separater Satz von extrinsischen Parametern berechnet werden. Die Berechnung dieser extrinsischen Kameraparameter erfolgt dabei vorzugsweise in Echtzeit. Insbesondere erfolgt bei einer Sequenz von mehreren aufeinanderfolgenden Bildern für jedes Bild dieser Bildfolge eine separate Berechnung der extrinsischen Parameter.

In Schritt S4 erfolgt eine Fusionierung der ersten Bilddaten und der zweiten Bilddaten unter Verwendung der ermittelten räumlichen Lage des zweiten Fahrzeugs 2 in Bezug auf das erste Fahrzeug 1. Insbesondere können dabei die ersten Bilddaten und die zweiten Bilddaten unter Verwendung der berechneten extrinsischen Parameter für die zweite Fahrzeugsensoreinheit 20 bzw. individuelle extrinsischer Kameraparameter für jede Kamera 20-i in der zweiten Fahrzeugsensoreinheit 20 fusioniert werden. Durch die Fusionierung der ersten Bilddaten und der zweiten Bilddaten erfolgt somit eine Generierung einer Umgebungsszene, die das Umfeld des Fahrzeuggespanns aus erstem Fahrzeug 1 und zweitem Fahrzeug 2 repräsentiert. Gegebenenfalls kann daraufhin in einem Schritt S5 eine grafische Darstellung des zweiten Fahrzeugs 2 generiert werden. Diese grafische Darstellung des zweiten Fahrzeugs 2 kann dabei entweder ein Linienmodell mit den Außenumrissen des zweiten Fahrzeugs 2, gegebenenfalls eine einfache kubische Modellierung des zweiten Fahrzeugs 2, oder alternativ auch eine detailgetreue Modellierung des zweiten Fahrzeugs 2 umfassen. Für die Modellierung des zweiten Fahrzeugs 2 können dabei neben den ersten Bilddaten von der ersten Fahrzeugsensoreinheit 10 auch eventuell weitere vorab gespeicherte Modelldaten verwendet werden. Die so generierte grafische Darstellung des zweiten Fahrzeugs kann daraufhin in die generierte Umgebungsszene integriert werden. Beispielsweise kann die grafische Darstellung als halbtransparentes Element mit der generierten Umgebungsszene überlagert werden.

Die so generierte Umgebungsszene kann daraufhin in Schritt S6 auf einer Fahrzeuganzeige 40 angezeigt werden.

Zusammenfassend betrifft die vorliegende Erfindung die Generierung und Darstellung einer Fahrzeugumgebung eines Fahrzeuggespanns aus zwei miteinander gekoppelten Fahrzeugen. Dabei werden jeweils an beiden Fahrzeugen des Fahrzeuggespanns Bilddaten sensorisch erfasst. Anschließend erfolgt unter Berücksichtigung der räumlichen Lage der beiden Fahrzeuge zueinander eine Fusionierung der Bilddaten zu einer gemeinsamen Umgebungsszene. Die so generierte gemeinsame Umgebungsszene ermöglicht es einem Fahrzeugführer die Umgebung im Umfeld des gesamten Fahrzeuggespanns effizient und sicher zu erfassen.

## Patentansprüche

1. Verfahren zum Anzeigen einer Umgebungsszene eines Fahrzeuggespanns, mit den Schritten:
(a) Bereitstellen (S1) von sensorisch erfassten ersten Bilddaten mittels einer an einem ersten Fahrzeug (1) angeordneten ersten Fahrzeugsensoreinheit (10);
(b) Bereitstellen (S2) von sensorisch erfassten zweiten Bilddaten mittels einer an einem zweite Fahrzeug (2) angeordneten zweiten Fahrzeugsensoreinheit (20) ;
(c) Ermitteln (S3) einer räumlichen Lage des zweiten Fahrzeugs (2) in Bezug auf das erste Fahrzeug (1);
(d) Fusionieren (S4) der ersten Bilddaten und der zweiten Bilddaten unter Verwendung der ermittelten räumlichen Lage des zweiten Fahrzeugs (2) in Bezug auf das erste Fahrzeug (1) zur Generierung einer Umgebungsszene;
Generieren (S5) einer grafischen Darstellung des zweiten Fahrzeugs (2); und
(e) Anzeigen (S6) der generierten Umgebungsszene auf einer Fahrzeuganzeige (40),
wobei vorbestimmte Fahrsituationen oder Fahrmanöver detektiert werden und ein Einblenden der generierten grafische Darstellung des zweiten Fahrzeugs (2) in die generierte Umgebungsszene in Abhängigkeit von der detektierten vorbestimmten Fahrsituation oder dem detektierten Fahrmanöver aktiviert oder deaktiviert wird.

2. Verfahren nach Anspruch 1, wobei sich Abbildungsbereiche der ersten Fahrzeugsensoreinheit (10) und der zweiten Fahrzeugsensoreinheit (20) teilweise überlappen.

3. Verfahren nach Anspruch 1 oder 2, wobei der Schritt (S3) zum Ermitteln der räumlichen Lage des zweiten Fahrzeugs (2) in Bezug auf das erste Fahrzeug (1) das zweite Fahrzeug (2) in den bereitgestellten ersten Bilddaten detektiert und die räumliche Lage des zweiten Fahrzeugs (2) basierend auf dem Detektionsergebnis für die Detektion des zweiten Fahrzeugs in den ersten Bilddaten ermittelt.

4. Verfahren nach einem der Ansprüche 1 bis 3, wobei das Ermitteln (S3) der räumlichen Lage des zweiten Fahrzeugs (2) in Bezug auf das erste Fahrzeug (1) das Ermitteln eines Winkels und/oder einen Abstand zwischen dem ersten Fahrzeug und dem zweiten Fahrzeug (2) umfasst.

5. Verfahren nach einem der Ansprüche 1 bis 4, wobei in dem Schritt (S5) zum Generieren einer grafischen Darstellung des zweiten Fahrzeugs (2) ein dreidimensionales Modell des zweiten Fahrzeugs (2) generiert wird und erste Bilddaten des zweiten Fahrzeugs auf Außenflächen des generierten dreidimensionalen Modells des zweiten Fahrzeugs (2) projiziert werden.

6. Verfahren nach einem der Ansprüche 1 bis 5, ferner umfassend einen Schritt zum Transformieren der sensorisch erfassten ersten Bilddaten und der sensorisch erfassten zweiten Bilddaten in eine vorbestimmte Projektionsebene,
wobei der Schritt (S4) zum Fusionieren der ersten Bilddaten und der zweiten Bilddaten die Umgebungsszene unter Verwendung der transformierten ersten Bilddaten und der transformierten zweiten Bilddaten generiert.

7. Verfahren nach einem der Ansprüche 1 bis 6, ferner umfassend einen Schritt zum Transformieren in der generierten Umgebungsszene in eine vorbestimmte Perspektive.

8. Verfahren nach einem der Ansprüche 1 bis 7, wobei die ersten Bilddaten und die zweiten Bilddaten jeweils durch mindestens eine Kamera (10-i, 20-i) geliefert werden.

9. Verfahren nach einem der Ansprüche 1 bis 8, ferner umfassend einen Schritt zum Berechnen von extrinsischen Parametern der zweiten Fahrzeugsensoreinheit (20), insbesondere von extrinsischen Kameraparametern einer Kamera (20-i) der zweiten Fahrzeugsensoreinheit (20).

10. Verfahren nach Anspruch 9, wobei die extrinsischen Parameter in Echtzeit berechnet werden.

11. Vorrichtung zum Anzeigen einer Umgebungsszene eines Fahrzeuggespanns, mit:
einer ersten Fahrzeugsensoreinheit (10), die an einem ersten Fahrzeug (1) angeordnet ist, und die dazu ausgelegt ist, erste Bilddaten bereitzustellen;
einer zweiten Fahrzeugsensoreinheit (20), die an einem zweiten Fahrzeug (2) angeordnet ist, und die dazu ausgelegt ist, zweite Bilddaten bereitzustellen;
einer Berechnungseinheit (30), die dazu ausgelegt ist, eine räumliche Lage des zweiten Fahrzeugs (2) in Bezug auf das erste Fahrzeug (1) zu ermitteln, und die ersten Bilddaten und die zweiten Bilddaten unter Verwendung der ermittelten räumlichen Lage des zweiten Fahrzeugs (2) in Bezug auf das erste Fahrzeug (1) zu fusionieren, um eine Umgebungsszene zu generieren, die auf einer mit der Berechnungseinheit (30) verbundenen Fahrzeuganzeige (40) angezeigt wird,
wobei die Berechnungseinheit (30) ferner dazu ausgelegt ist, eine grafische Darstellung des zweiten Fahrzeugs (2) zu generieren und ein Einblenden der generierten grafischen Darstellung des zweiten Fahrzeugs (2) in die generierte Umgebungsszene in Abhängigkeit von einer detektierten vorbestimmten Fahrsituation oder einem detektierten Fahrmanöver zu aktivieren oder zu deaktivieren.

12. Vorrichtung nach Anspruch 11, wobei die Berechnungseinheit (30) einen Grafikprozessor, GPU, umfasst.

13. Vorrichtung nach einem der Ansprüche 11 oder 12, ferner umfassend eine Lagesensoreinheit (35), die dazu ausgelegt ist, einen Winkel und/oder einen Abstand zwischen dem ersten Fahrzeug (1) und dem zweiten Fahrzeug (2) zu erfassen und an der Berechnungseinheit (30) bereitzustellen.

14. Vorrichtung nach einem der Ansprüche 11 bis 13, wobei die erste Fahrzeugsensoreinheit (10) und/oder die zweite Fahrzeugsensoreinheit (20) jeweils mindestens eine Fahrzeugkamera (10-i, 20-i) umfassen.

15. Surround-View-System für ein Fahrzeuggespann mit einem ersten Fahrzeug (1) und einem mit dem ersten Fahrzeug (1) mechanisch gekoppelten zweiten Fahrzeug (2), umfassend:
eine Vorrichtung zum Anzeigen einer Umgebungsszene nach einem der Ansprüche 11 bis 14; und
eine Fahrzeuganzeige (40), die in dem ersten Fahrzeug (1) angeordnet ist, und die dazu ausgelegt ist, die generierte Umgebungsszene anzuzeigen.

## Claims

1. A method for displaying an image of the surroundings of a vehicle combination, having the steps of:
(a) providing (S1) first image data captured by sensors by means of a first vehicle sensor unit (10) arranged on a first vehicle (1);
(b) providing (S2) second image data captured by sensors by means of a second vehicle sensor unit (20) arranged on a second vehicle (2);
(c) establishing (S3) a spatial position of the second vehicle (2) in relation to the first vehicle (1);
(d) combining (S4) the first image data and the second image data using the established spatial position of the second vehicle (2) in relation to the first vehicle (1) in order to generate an image of the surroundings;
generating (S5) a graphical representation of the second vehicle (2); and
(e) displaying (S6) the generated image of the surroundings on a vehicle display (40),
wherein predetermined driving situations or driving maneuvers are detected, and an insertion of the generated graphical representation of the second vehicle (2) into the generated image of the surroundings is activated or deactivated as a function of the detected predetermined driving situation or the detected driving maneuver.

2. The method according to Claim 1, wherein image areas of the first vehicle sensor unit (10) and the second vehicle sensor unit (20) partially overlap.

3. The method according to Claim 1 or 2, wherein the step (S3) to establish the spatial position of the second vehicle (2) in relation to the first vehicle (1) detects the second vehicle (2) in the first image data provided, and establishes the spatial position of the second vehicle (2) based on the detection result for the detection of the second vehicle in the first image data.

4. The method according to any one of Claims 1 to 3, wherein establishing (S3) the spatial position of the second vehicle (2) in relation to the first vehicle (1) comprises establishing an angle and/or a distance between the first vehicle and the second vehicle (2).

5. The method according to any one of Claims 1 to 4, wherein in the step (S5) to generate a graphical representation of the second vehicle (2) a three-dimensional model of the second vehicle (2) is generated and first image data of the second vehicle is projected onto outer surfaces of the generated three-dimensional model of the second vehicle (2) .

6. The method according to any one of Claims 1 to 5, further comprising a step to transform the first image data captured by sensors and the second image data captured by sensors into a predetermined projection plane,
wherein the step (S4) to combine the first image data and the second image data generates the image of the surroundings using the transformed first image data and the transformed second image data.

7. The method according to any one of Claims 1 to 6, further comprising a step to transform in the generated image of the surroundings into a predetermined perspective.

8. The method according to any one of Claims 1 to 7, wherein the first image data and the second image data are each supplied by at least one camera (10-i, 20-i).

9. The method according to any one of Claims 1 to 8, further comprising a step to calculate extrinsic parameters of the second vehicle sensor unit (20), in particular extrinsic camera parameters of a camera (20-i) of the second vehicle sensor unit (20).

10. The method according to Claim 9, wherein the extrinsic parameters are calculated in real time.

11. A device for displaying an image of the surroundings of a vehicle combination, having:
a first vehicle sensor unit (10) which is arranged on a first vehicle (1) and which is designed to provide first image data;
a second vehicle sensor unit (20) which is arranged on a second vehicle (2) and which is designed to provide second image data;
a calculation unit (30) which is designed to establish a spatial position of the second vehicle (2) in relation to the first vehicle (1), and to combine the first image data and the second image data using the established spatial position of the second vehicle (2) in relation to the first vehicle (1), in order to generate an image of the surroundings, which is displayed on a vehicle display (40) connected to the calculation unit (30),
wherein the calculation unit (30) is further designed to generate a graphical representation of the second vehicle (2), and to activate or deactivate an insertion of the generated graphical representation of the second vehicle (2) into the generated image of the surroundings as a function of a detected predetermined driving situation or a detected driving maneuver.

12. The device according to Claim 11, wherein the calculation unit (30) comprises a graphics processing unit (GPU).

13. The device according to any one of Claims 11 or 12, further comprising a position sensor unit (35) which is designed to capture an angle and/or a distance between the first vehicle (1) and the second vehicle (2) and to provide this/these to the calculation unit (30).

14. The device according to any one of Claims 11 to 13, wherein the first vehicle sensor unit (10) and/or the second vehicle sensor unit (20) respectively comprise(s) at least one vehicle camera (10-i, 20-i).

15. A surround view system for a vehicle combination having a first vehicle (1) and a second vehicle (2) mechanically coupled to the first vehicle (1), comprising:
a device for displaying an image of the surroundings according to any one of Claims 11 to 14; and
a vehicle display (40) which is arranged in the first vehicle (1) and which is designed to display the generated image of the surroundings.

## Revendications

1. Procédé d'affichage d'une scène environnante d'un attelage de véhicules, comprenant les étapes suivantes :
(a) fourniture (S1) de premières données d'image détectées par capteur au moyen d'une première unité de capteur de véhicule (10) disposée sur un premier véhicule (1) ;
(b) fourniture (S2) de deuxièmes données d'image détectées par capteur au moyen d'une deuxième unité de capteur de véhicule (20) disposée sur un deuxième véhicule (2) ;
(c) détermination (S3) d'une position spatiale du deuxième véhicule (2) par rapport au premier véhicule (1) ;
(d) fusion (S4) des premières données d'image et des deuxièmes données d'image en recourant à la position spatiale déterminée du deuxième véhicule (2) par rapport au premier véhicule (1), pour la génération d'une scène environnante ;
génération (S5) d'une représentation graphique du deuxième véhicule (2) ; et
(e) affichage (S6) de la scène environnante générée sur un afficheur de véhicule (40),
où des situations de conduite prédéterminées ou des manoeuvres de conduite sont détectées et une incrustation de la représentation graphique générée du deuxième véhicule (2) dans la scène environnante générée est activée ou désactivée en fonction de la situation de conduite prédéterminée détectée ou de la manoeuvre de conduite détectée.

2. Procédé selon la revendication 1, où des plages de représentation de la première unité de capteur de véhicule (10) et de la deuxième unité de capteur de véhicule (20) se chevauchent partiellement.

3. Procédé selon la revendication 1 ou la revendication 2, où l'étape (S3) de détermination de la position spatiale du deuxième véhicule (2) par rapport au premier véhicule (1) détecte le deuxième véhicule (2) dans les premières données d'image fournies et détermine la position spatiale du deuxième véhicule (2) sur la base du résultat de détection du deuxième véhicule dans les premières données d'image.

4. Procédé selon l'une quelconque des revendications 1 à 3, où la détermination (S3) de la position spatiale du deuxième véhicule (2) par rapport au premier véhicule (1) comprend la détermination d'un angle et/ou d'un intervalle entre le premier véhicule et le deuxième véhicule (2).

5. Procédé selon l'une quelconque des revendications 1 à 4, où, lors de l'étape (S5) de génération d'une représentation graphique du deuxième véhicule (2), un modèle tridimensionnel du deuxième véhicule (2) est généré et des premières données d'image du deuxième véhicule sont projetées sur des surfaces extérieures du modèle tridimensionnel généré du deuxième véhicule (2).

6. Procédé selon l'une quelconque des revendications 1 à 5, comprenant en outre une étape de transformation des premières données d'image détectées par capteur et des deuxièmes données d'image détectées par capteur sur un plan de projection prédéfini,
l'étape (S4) de fusion des premières données d'image et des deuxièmes données d'image générant la scène environnante en recourant aux premières données d'image transformées et aux deuxièmes données d'image transformées.

7. Procédé selon l'une quelconque des revendications 1 à 6, comprenant en outre une étape de transformation dans la scène environnante générée en une perspective prédéfinie.

8. Procédé selon l'une quelconque des revendications 1 à 7, où les premières données d'image et les deuxièmes données d'image sont fournies respectivement par au moins une caméra (10-i, 20-i).

9. Procédé selon l'une quelconque des revendications 1 à 8, comprenant en outre une étape de calcul de paramètres extrinsèques de la deuxième unité de capteur de véhicule (20), en particulier de paramètres de caméra extrinsèques d'une caméra (20-i) de la deuxième unité de capteur de véhicule (20).

10. Procédé selon la revendication 9, où les paramètres extrinsèques sont calculés en temps réel.

11. Dispositif pour l'affichage d'une scène environnante d'un attelage de véhicules, comprenant :
une première unité de capteur de véhicule (10) disposée sur un premier véhicule (1) et prévue pour fournir des premières données d'image ;
une deuxième unité de capteur de véhicule (20) disposée sur un deuxième véhicule (2) et prévue pour fournir des deuxièmes données d'image ;
une unité de calcul (30) prévue pour déterminer une position spatiale du deuxième véhicule (2) par rapport au premier véhicule (1), et pour fusionner les premières données d'image et les deuxièmes données d'image en recourant à la position spatiale déterminée pour le deuxième véhicule (2) par rapport au premier véhicule (1), afin de générer une scène environnante affichée sur un afficheur de véhicule (40) relié à l'unité de calcul (30),
où l'unité de calcul (30) est en outre prévue pour générer une représentation graphique du deuxième véhicule (2) et activer ou désactiver une incrustation de la représentation graphique générée du deuxième véhicule (2) dans la scène environnante générée en fonction d'une situation de conduite prédéterminée détectée ou d'une manoeuvre de conduite détectée.

12. Dispositif selon la revendication 11, où l'unité de calcul (30) comprend un processeur graphique GPU.

13. Dispositif selon la revendication 11 ou la revendication 12, comprenant en outre une unité de détection de position (35) prévue pour détecter un angle et/ou un intervalle entre le premier véhicule (1) et le deuxième véhicule (2) et délivrer celui-ci à l'unité de calcul (30).

14. Dispositif selon l'une quelconque des revendications 11 à 13, où la première unité de capteur de véhicule (10) et/ou la deuxième unité de capteur de véhicule (20) comprennent chacune au moins une caméra de véhicule (10-i, 20-i).

15. Système à vue panoramique pour un attelage de véhicules comprenant un premier véhicule (1) et un deuxième véhicule (2) accouplé mécaniquement au premier véhicule (1), comprenant :
un dispositif pour l'affichage d'une scène environnante selon l'une quelconque des revendications 11 à 14 ; et
un afficheur de véhicule (40) disposé dans le premier véhicule (1) et prévu pour afficher la scène environnante générée.
